# FASCICULE DE BREVET EUROPEEN

(11) **EP 0 984 243 B1**
(45) Date de publication et mention de la délivrance du brevet: **26.11.2003**
(21) Numéro de dépôt: 98402198.0
(22) Date de dépôt: 04.09.1998
(51) Int. Cl.: G01B 11/16, G01L 1/24

(54) **Dispositif à fibre optique pour la mesure de contraintes**
Lichtwellenleiterverformungssensor
Fibre optic strain sensor

(43) Date de publication de la demande: 08.03.2000
(73) Titulaire: Fiber Optic Sensors- FOS SA, 1213 Petit-Lancy (CH)
(72) Inventeur: Kanellopoulos, Vasilios, 1256 Troinex (CH); Ricard, Jean-François, 74160 Neydens (FR); Kotrotsios, Georges, 1163 Etoy (CH)
(74) Mandataire: Savoye, Jean-Paul

(56) Documents cités:
- WO-A-97/19325
- US-A- 4 636 638
- US-A- 5 649 035
- SMART MATERIALS AND STRUCTURES MEASURES R M ET AL: 'WAVELENGTH DEMODULATED BRAGG GRATING FIBER OPTIC SENSING SYSTEMS FOR ADDRESSING SMART STRUCTURE CRITICAL ISSUES' vol. 1, no. 1, 01 Mars 1992,, pages 36 - 44, XP000399871
- VAN UFFELEN M. ET AL.: "Anchoring points for fibre optic strain sensors" IEEE COLLOQUIUM ON OPTICAL TECHNIQUES FOR SMART STRUCTURES AND STRUCTURAL MONITORING (REF. NO. 1997/033), no. 9, 17 février 1997, pages 1-6, XP002091519

## Description

La présente invention se rapporte à un dispositif à fibre optique pour la mesure de contraintes, comprenant au moins un transducteur formé d'une matrice traversée par au moins un segment de fibre optique conformée pour que la transmission de lumière soit modifiée en fonction d'une contrainte à mesurer, transmise par ladite matrice à ladite fibre optique, une extrémité d'entrée de cette fibre optique étant destinée à être reliée à un photoémetteur et une extrémité de sortie à un photorécepteur.

Il existe déjà un certain nombre de jauges de contraintes associées à une ou plusieurs fibres optiques conformées pour produire une modification de la lumière transmise à travers la fibre en fonction de la contrainte à laquelle cette fibre est soumise.

On a proposé dans le EP 0 640 824 un système pour détecter des fissures sur une structure, comprenant une pluralité de fibres optiques fixées parallèlement sur un support, lui-même fixé à la structure à examiner. Un réseau de Bragg peut être ménagé le long de la fibre pour mesurer des contraintes. Dans ce cas, les fibres optiques ne font pas partie intégrante du support de mesure, mais sont fixées à la surface de ce support. En outre, ce support ne constitue pas une jauge de contrainte dont les propriétés de déformation sont connues, mais une simple interface entre la fibre et la structure à mesurer. Il s'agit dans ce cas de détecter la présence de fissures et non de mesurer la grandeur d'une contrainte.

Dans le cas du WO 97/15805, une fibre optique incluant un réseau de Bragg est enroulée autour de deux plots s'étendant perpendiculairement à une plaque support qui peut être soudée à une structure métallique dont on veut mesurer les contraintes. Les contraintes de la structure sont communiquées au support des plots, variant leur écartement et, par conséquent la tension exercée sur la fibre, de sorte que le réseau de Bragg permet de varier la longueur d'onde de la lumière transmise le long de la fibre optique en fonction de la grandeur de la contrainte.

La mesure effectuée à l'aide de cette sonde est fonction de la tension d'enroulement de la fibre optique, qui est susceptible de varier en fonction du temps et de la température notamment, de sorte qu'une telle sonde doit être étalonnée périodiquement. Etant donné que plusieurs dizaines, voire centaines de sondes peuvent être nécessaires pour contrôler une structure telle qu'un pont, un barrage, une voilure d'avion, des générateurs de vapeurs de centrales thermiques et en général tous les ouvrages de génie civil, un tel travail d'étalonnage de chaque sonde est pratiquement impossible à envisager.

Le US 5 594 819 se rapporte à un mode de fixation d'une fibre optique de mesure de contrainte à une structure métallique selon lequel la fibre est métallisée et fixée à une cale de support métallique par brasage ou soudage et ce support est lui-même fixé par soudage à la structure métallique à mesurer. La complexité de ce mode de fixation rend une telle sonde coûteuse à fabriquer.

Le EP 0 357 253 se rapporte à un détecteur à fibre optique dans lequel la fibre optique est noyée dans une matrice choisie pour subir une déformation en fonction d'un paramètre à mesurer. Cette déformation se transmet à la fibre optique modifiant les propriétés de propagation de la lumière à travers cette fibre et permettant de donner la grandeur du paramètre en fonction de la contrainte mesurée. La matrice doit donc être réalisée en un matériau susceptible de subir une transformation en présence du paramètre à mesurer. Il ne s'agit donc pas ici d'une jauge de contrainte, la contrainte étant une grandeur caractéristique du paramètre à mesurer et non le paramètre à mesurer lui-même.

La plupart des solutions susmentionnées ne se rapportent pas à des jauges de contraintes et notamment pas à une jauge de contrainte associant une fibre optique de mesure à une matrice composite. Le seul document dans lequel la fibre optique est noyée dans une matrice pour mesurer une contrainte, la contrainte est caractéristique d'un autre paramètre à mesurer, de sorte qu'il ne s'agit pas d'une jauge de contrainte, mais d'une jauge dont la matrice est conçue pour transformer une certaine grandeur physique à mesurer en contrainte proportionnelle de cette grandeur physique.

Une jauge de contrainte à fibre optique est bien décrite dans le EP 0 380 764. Dans ce cas, la fibre optique n'est pas noyée dans une matrice et la solution en question nécessite des opérations de montage et de réglage qui renchérissent l'instrument. En plus la fibre optique n'est pas protégée et peut subir des influences, voire des dégradations susceptibles d'avoir des répercussions sur le résultat de la mesure.

Le but de la présente invention est de remédier, au moins partiellement aux inconvénients des solutions susmentionnées.

A cet effet, la présente invention a pour objet un transducteur à fibre optique pour la mesure de contraintes tel que défini par la revendication 1.

Différentes variantes et particularités complémentaires de cette jauge sont définies dans les autres revendications.

La jauge de contrainte selon l'invention présente des caractéristiques propres, qui sont connues et parfaitement reproductibles d'une jauge à l'autre. Ces caractéristiques, en particulier le module d'élasticité, peuvent en outre être adaptées en fonction de la structure dont on veut mesurer les contraintes. Une fois la fibre optique intégrée au matériau composite formant le transducteur de la jauge, elle se comporte comme un élément de la matrice elle-même. De plus cette matrice joue un rôle protecteur de la fibre vis-à-vis des agressions ou des influences externes non désirables.

Aucun étalonnage n'est nécessaire, les caractéristiques de la jauge étant choisies en fonction du matériau composite utilisé, elle peut être fixée ou intégrée à une structure quelconque, les valeurs mesurées étant celles des contraintes de cette structure.

Le dessin annexé illustre, schématiquement et à titre d'exemple, deux formes d'exécution du transducteur à fibre optique pour la mesure de contraintes, objet de la présente invention.
La figure 1 est une vue en plan de la première forme d'exécution;
la figure 2 est une vue en perspective de la seconde forme d'exécution.

Le transducteur selon la première forme d'exécution présente la forme d'un transducteur allongé 1 d'épaisseur constante en un matériau composite, formant une jauge de contrainte, comprenant une partie centrale 2 de section constante destinée à la mesure des contraintes, dont les deux extrémités sont solidaires de parties de transmission des contraintes 3, 4, conformées pour relier cette jauge à la structure dont on veut mesurer la contrainte. Chacune de ces parties de transmission des contraintes présente une partie renflée, reliée à la partie centrale 2 par des rayons de courbure R₁, R₂. Ces parties de transmission des contraintes 3, 4 qui servent à transmettre les contraintes de la structure à la partie centrale 2 comportent chacune deux ouvertures 5a, 5b respectivement 6a, 6b occupant des positions relatives symétriques par rapport à l'axe longitudinal du transducteur allongé 1. Ces ouvertures servent à la fixation des parties de transmission des contraintes 3, 4 à la structure à contrôler, qui doit alors être pourvue de tenons aptes à s'emboîter dans les ouvertures 5a, 5b, 6a, 6b, des vis pouvant permettre de garantir la fixation du transducteur sur la structure à mesurer.

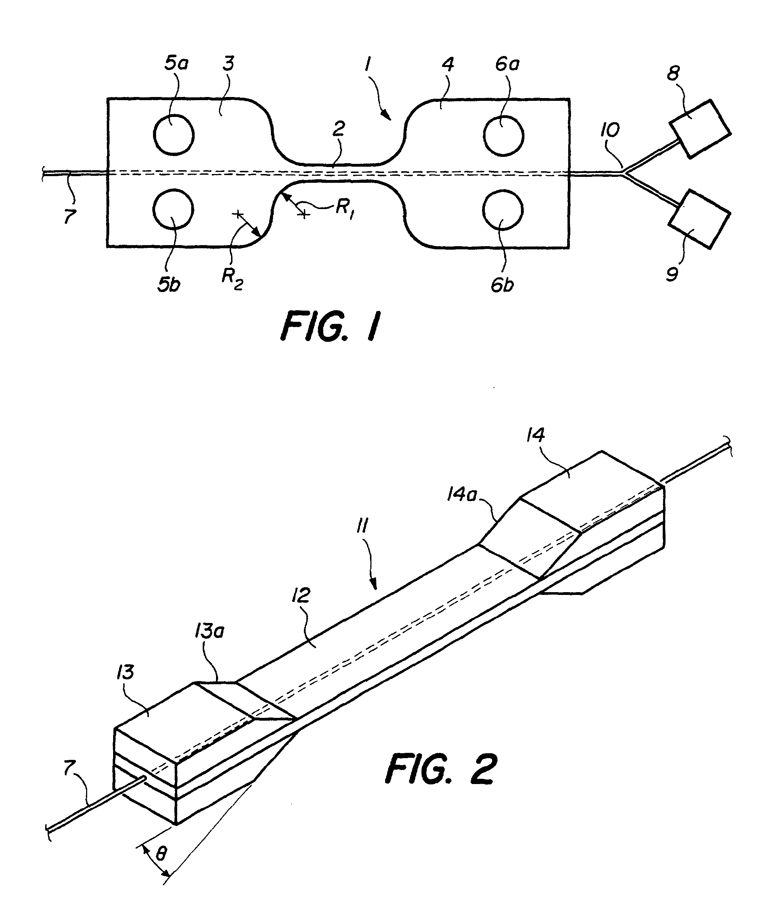

Une fibre optique 7 passe longitudinalement à travers le transducteur allongé 1. Une de ses extrémités est destinée à être connectée à un photoémetteur 8 tandis que l'autre est connectée à un photorécepteur 9. Suivant le dispositif de mesure utilisé, la lumière peut être réfléchie, partiellement ou totalement, de sorte que le photoémetteur 8 et le photorécepteur 9 peuvent alors se trouver, comme illustré par la figure 1, à une même extrémité de la fibre optique 7, cette extrémité de la fibre optique 7 présentant alors la forme d'un Y, 10 pour permettre de connecter la même extrémité de la fibre optique 7 à l'émetteur 8 et au récepteur 9, de façon bien connue de l'homme de métier. Le segment de la fibre optique 7 passant à travers la partie centrale 2 du transducteur 1 de la jauge de contrainte présente, par exemple, un réseau de Bragg, destiné à réfléchir sélectivement une longueur d'onde déterminée, celle-ci variant en fonction de l'allongement de la fibre optique 7 soumise à la contrainte à mesurer. La longueur d'onde de la lumière réfléchie comparée à celle de la lumière incidente, permet de déterminer la valeur de cette contrainte. D'autres principes de mesure de lumière pourraient aussi être utilisés, telle que l'interférométrie.

Le transducteur 1 en matériau composite du selon l'invention est formé par empilement de feuilles d'une résine destinée à constituer la matrice, dans lesquelles sont noyées des nappes de filaments de renfort rectilignes, disposés parallèlement les uns aux autres. Dans cet exemple, la résine est du PEEK et les filaments de renfort sont des filaments à haut module d'élasticité, notamment des filaments de carbone, des fibres aramide, voire des filaments de verre. Le choix des filaments et leur proportion dans la matrice dépend du module d'élasticité désiré pour le transducteur 1.

Selon un exemple de réalisation, on découpe des feuilles de PEEK armées de filaments de renfort à la forme du transducteur 1. Certaines de ces feuilles sont découpées pour que les filaments de renfort se trouvent disposées parallèlement à l'axe longitudinal du transducteur 1, d'autres avec les filaments de renfort s'étendant perpendiculairement à cet axe longitudinal. Selon une variante, les feuilles pourraient être découpées à la forme du transducteur après avoir été empilées.

On empile ensuite ces feuilles dans un moule formé de deux parties, l'une supérieure, l'autre inférieure, de même forme que le transducteur 1 si les feuilles sont préalablement découpées à la forme du transducteur, sinon le moule aura une même forme rectangulaire que celle des feuilles. Avantageusement, on peut disposer sur chaque face de l'empilement une feuille d'aluminium destinée à faciliter le démoulage. On place tout d'abord la partie inférieure du moule dans un étau. On pulvérise un produit destiné à faciliter le démoulage à la surface du moule et on pose une feuille d'aluminium à la surface de laquelle on pulvérise du produit démoulant.

Dans l'exemple qui suit, on a empilé ensuite huit feuilles de matériau composite prédécoupées en alternant les feuilles où lès filaments forment un angle de 0° avec l'axe longitudinal et celles où elles forment un angle de 90° avec cet axe longitudinal, de la manière suivante: 1 feuille à orientation des filaments à 0°, 1 feuille à orientation des filaments à 90°, 2 feuilles à orientation 0°, 1 feuille à orientation 90°, 3 feuilles à orientation 0°.

On dispose alors la fibre optique 7 le long de l'axe longitudinal, c'est-à-dire bien centrée par rapport à la largeur du transducteur, avec son réseau de Bragg centré longitudinalement par rapport à la partie centrale 2 du transducteur 1. On attache un poids à chaque extrémité de cette fibre optique 7 pour assurer qu'elle soit bien rectiligne, et on poursuit l'empilement des feuilles de matériau composite prédécoupées, en disposant successivement, 3 feuilles à orientation 0°, 1 feuille à orientation 90°, 2 feuilles à orientation 0°, 1 feuille à orientation 90° et 1 feuille à orientation 0°. On pose enfin la seconde feuille d'aluminium à la surface de laquelle on pulvérise du produit démoulant, que l'on peut aussi pulvériser à la surface de la partie supérieure du moule.

On serre alors les vis servant à serre les deux parties du moule l'une contre l'autre en serrant successivement deux vis M10 disposées selon une diagonale du moule, puis deux autres vis M10 disposées selon l'autre diagonale du moule, puis deux vis M10 disposées symétriquement à l'axe longitudinal du transducteur 1, le long d'une perpendiculaire passant par le centre de cet axe longitudinal. On serre ces vis avec un moment de force de 4 N.m à l'aide d'une clef dynamométrique.

On chauffe alors le moule pendant 10 mn à 400°C puis on resserre les vis avec un moment de 4 N.m. On maintient la température à 400°C pendant encore 25 mn et on serre les vis du moule avec un moment de 5 N.m. On maintient encore la température de chauffage durant 25 mn et on laisse refroidir le tout avant de démouler.

Dans l'exemple décrit, le transducteur 1 a une épaisseur de l'ordre de 2,2 mm, une longueur de 120 mm, la longueur de la partie médiane 2 étant de 20 mm et sa largeur de 5 mm, les rayons R₁ et R₂ ont 10 mm chacun et la largeur des parties de transmission des contraintes 3, 4 est de 24 mm.

En variante le composite utilisé peut aussi être un composite renforcé par un mélange de filaments à haut module d'élasticité du type susmentionné et de filaments de métal, de manière à permettre le soudage du transducteur sur la structure à contrôler.

Selon une autre variante, on peut choisir les composants entrant dans la composition du matériau composite et leurs proportions de manière à obtenir un matériau composite dont le coefficient thermique est voisin de zéro, de manière à compenser les effets des variations de température qui modifient le comportement du réseau de Bragg. Ceci permet donc d'obtenir un transducteur auto-compensateur.

Le transducteur selon la première forme d'exécution illustrée par la figure 1 est plus particulièrement destiné à être fixé à la surface d'une structure à contrôler en raison de son épaisseur constante et des ouvertures 5a, 5b, 6a, 6b destinées à permettre de fixer le transducteur à la structure à contrôler.

La seconde forme d'exécution illustrée par la figure 2 est par contre étudiée plus spécialement pour pouvoir être noyée dans une structure, en particulier dans une structure en béton. Le transducteur 11 est de largeur constante, la partie centrale 12 de mesure de contrainte est constituée par une lame et les parties de transmission des contraintes 13, 14 sont, dans ce cas, plus épaisses que la partie centrale 12, la surépaisseur se répartissant sensiblement symétriquement de part et d'autre de la lame de la partie centrale. La face transversale interne 13a, respectivement 14a de chaque partie de transmission des contraintes 13, 14 forme un angle θ compris entre 6° et 30°, de préférence entre 6° et 15°. La fibre optique 7 passe sensiblement le long de l'axe longitudinal du transducteur 11 et un réseau de Bragg est centré au milieu de la longueur de la partie de mesure de contrainte 12.

Comme dans la forme d'exécution précédente, le transducteur 11 est en matériau composite renforcé de filaments à haut module d'élasticité. Dans cet exemple, la jauge de contrainte a une longueur de 640 mm, la partie centrale 12 ayant une longueur de 320 mm. La largeur de ce transducteur 11 est de 80 mm. L'épaisseur de la partie centrale 12 est de 2 à 2,5 mm et celle des parties de transmission des contraintes 13, 14, entre 6 et 7 mm.

L'avantage de cette forme d'exécution réside dans le fait qu'elle ne nécessite pas que la structure soit pourvue de moyens de fixation, puisqu'il suffit de noyer le transducteur dans la structure à contrôler. Par contre cet avantage est limité pratiquement aux ouvrages en béton en construction, alors que la première forme d'exécution peut être fixée à n'importe quelle structure, ainsi qu'aux structures en béton existantes.

Jusqu'ici, on a décrit des formes d'exécutions dans lesquelles une fibre optique 7 traverse un transducteur. Il est bien évident pour l'homme de métier qu'une même fibre optique peut comporter plusieurs réseaux de Bragg de longueurs d'ondes différentes répartis à des distances déterminées le long de cette fibre optique, chacun de ces réseaux étant associé à un transducteur 1 ou 11, les signaux réfléchis par chaque réseau de Bragg étant multiplexés par le photorécepteur 9. Grâce à cette disposition, il est possible de mesurer typiquement les signaux de 10 à 20 transducteurs avec le même appareil de mesure et de différencier les résultats grâce au multiplexage, permettant ainsi de connaître la valeur de la contrainte enregistrée par chaque transducteur. Le nombre de transducteurs et l'écartement entre eux peuvent être adaptés en fonction de la structure à contrôler.

Dans un tel cas, il est très important de réduire au maximum les pertes induites par les micro-coubures communiquées à la fibre optique. Pour réduire autant que possible ces micro-coubures, on exerce une certaine tension sur la fibre optique 7 en fixant un poids à chacune de ses extrémités pour la maintenir aussi rectiligne que possible. Toutefois, on a pu constater que ceci n'était pas suffisant et on a constaté que des micro-coubures sont produites par les fibres de renfort noyées dans la matrice du composite.

En effet, comme on l'a mentionné dans l'exemple qui précède, la matrice du transducteur 1 ou 11 est formée de feuilles de filaments continus de renfort parallèles enduits de la résine de la matrice, les orientations de ces filaments de renfort étant croisées avec des angles de 90°. Toutefois, comme on peut s'en rendre compte sur cet exemple, plus on se rapproche de la fibre optique 7, plus le nombre de couches avec filaments de renfort orientés parallèlement à la fibre augmente. On a en effet pu constater qu'en augmentant la proportion de couches à filaments de renfort parallèles à la fibre optique 7 dans le voisinage immédiat de celle-ci, on réduisait les micro-courbures sur cette fibre optique et par la même occasion, on diminuait les pertes, ce qui permet d'augmenter le nombre de transducteurs qui peuvent être disposés le long d'une même fibre optique.

A titre de variante, on peut aussi utiliser l'interférométrie pour effectuer la mesure de contrainte. Dans ce cas, on mesure l'interférence des signaux lumineux parcourant deux fibres optiques, l'une soumise à la contrainte à mesurer, l'autre une fibre optique de référence.

Enfin, un même transducteur pourrait encore être traversé par deux fibres optiques disposées de part et d'autre de la fibre neutre du transducteur, pour mesurer une compression à l'aide de l'une d'elles et une traction avec l'autre.

## Revendications

1. Dispositif à fibre optique pour la mesure de contraintes, comprenant au moins un transducteur (1; 11) formé d'une matrice traversée par au moins un segment de fibre optique (7) conformée pour que la transmission de lumière soit modifiée en fonction d'une contrainte à mesurer, transmise par ladite matrice à ladite fibre optique (7), une extrémité d'entrée de cette fibre optique (7) étant destinée à être reliée à un photoémetteur (8) et une extrémité de sortie à un photorécepteur (9), **caractérisé en ce que** ledit transducteur (1; 11) est de forme allongée, traversé longitudinalement par ledit segment de fibre optique (7) et qu'il comprend un tronçon médian (2; 12) destiné à être soumis aux contraintes à mesurer, ses deux extrémités étant solidaires respectivement de deux parties de transmission des contraintes (3, 4; 13, 14) audit tronçon médian (2; 12), présentant des moyens (5a, 5b, 6a, 6b; 13a, 14a) pour les rendre solidaires de la structure à mesurer et **en ce que** ladite matrice est en un matériau composite renforcé de filaments pour donner audit transducteur (1; 11) un module d'élasticité qui peut être adapté en fonction de la structure à mesurer.

2. Dispositif selon la revendication 1, **caractérisé en ce que** ledit transducteur (1) est d'épaisseur sensiblement constante, ladite fibre optique (7) traversant ce transducteur (1; 11) sensiblement au milieu de son épaisseur et de sa largeur.

3. Dispositif selon l'une des revendications précédentes, **caractérisé en ce que** lesdits filaments de renfort sont des filaments à haut module d'élasticité.

4. Dispositif selon l'une des revendications précédentes, **caractérisé en ce que** lesdits filaments de renfort sont réparties sous forme de couches de filaments parallèles tantôt orientées longitudinalement tantôt transversalement audit transducteur.

5. Dispositif selon la revendication 4, **caractérisé en ce que** les couches de matériau composites adjacentes à ladite fibre optique (7) présentent des filaments de renfort orientés parallèlement à cette fibre optique (7) et que le nombre ou de couches successives ou l'épaisseur de celles-ci dans lesquelles les filaments de renfort sont orientés parallèlement à cette fibre optique (7) augmente au fur et à mesure que l'on se rapproche de ladite fibre optique (7).

6. Dispositif selon l'une des revendications précédentes, **caractérisé en ce que** lesdits moyens pour modifier la transmission de lumière à travers ladite fibre optique sont formés par un réseau de Bragg.

7. Dispositif selon la revendication 6, **caractérisé en ce que** le coefficient thermique de ladite matrice est choisi voisin de zéro afin de compenser les effets des variations de température sur le réseau de Bragg.

8. Dispositif selon l'une des revendications précédentes, **caractérisé en ce que** du métal est incorporé à ladite matrice au voisinage d'au moins une de ses faces externes, pour permettre de souder ledit transducteur (1; 11) à une structure métallique.

9. Dispositif selon l'une des revendications 1, 3 à 8, **caractérisé en ce que** lesdites parties de transmission des contraintes (13, 14) présentent chacune deux surépaisseurs de part et d'autre d'une lame (12) s'étendant sur toute la longueur dudit transducteur (11), la face transversale (13a, 14a) interne de chaque surépaisseur formant un angle (θ) compris entre 6° et 30° avec les faces respectives de ladite lame (12).

10. Dispositif selon l'une des revendications précédentes, **caractérisé en ce qu'**une pluralité de transducteurs sont associé à une même fibre optique, les segments respectifs de la fibre associés à ladite pluralité de transducteurs présentant chacun un réseau de Bragg réfléchissant une longueur d'onde différente, ledit photorécepteur (9) comportant des moyens de multiplexage des signaux réfléchis.

## Patentansprüche

1. Faseroptische Vorrichtung für Dehnungsmessungen mit zumindest einem Transduktor (1; 11), der aus einer Matrix gebildet wird, durch die zumindest ein Segment einer Glasfaser (7) hindurchgeht, die so ausgebildet ist, dass die Lichtdurchlässigkeit in Abhängigkeit von einer zu messenden Dehnung modifiziert wird, die durch diese Matrix auf diese Glasfaser (7) übertragen wird, wobei ein Eingangsanschluss dieser Glasfaser (7) mit einem Photoemitter (8) und ein Ausgangsanschluss mit einem Photorezeptor (9) verbunden zu werden bestimmt ist, **dadurch gekennzeichnet, dass** dieser Transduktor (1; 11) eine längliche Gestalt hat und dieses Segment einer Glasfaser (7) längs durch ihn hindurchgeht, dadurch, dass er einen mittleren Abschnitt (2; 12) hat, der dafür bestimmt ist, den zu messenden Dehnungen unterworfen zu werden, wobei seine beiden Enden fest mit zwei Abschnitten (3, 4; 13, 14) verbunden sind, an welchen die Dehnungen an diesen mittleren Abschnitt (2; 12) übertragen werden und welche Mittel (5a, 5b, 6a, 6b; 13a, 14a) aufweisen, um sie fest mit der zu vermessenden Struktur zu verbinden; und dadurch, dass diese Matrix aus einem mit Filamenten verstärkten Verbundwerkstoff besteht, um diesem Transduktor (1; 11) einen Elastizitätsmodul zu verleihen, der in Abhängigkeit von der zu vermessenden Struktur angepasst werden kann.

2. Vorrichtung nach Anspruch 1, **dadurch gekennzeichnet, dass** dieser Transduktor (1) von im Wesentlichen konstanter Dicke ist, während diese Glasfaser (7) im Wesentlichen in der Mitte seiner Dicke und Breite durch diesen Transduktor (1; 11) hindurchgeht.

3. Vorrichtung nach einem der vorangehenden Ansprüche, **dadurch gekennzeichnet, dass** diese Verstärkungsfilamente Filamente mit einem hohen Elastizitätsmodul sind.

4. Vorrichtung nach einem der vorangehenden Ansprüche, **dadurch gekennzeichnet, dass** diese Verstärkungsfilamente in Gestalt von Schichten paralleler Filamente verteilt sind, die bald längs, bald quer zu diesem Transduktor ausgerichtet sind.

5. Vorrichtung nach Anspruch 4, **dadurch gekennzeichnet, dass** die Schichten des Verbundwerkstoffs, die an diese Glasfaser (7) angrenzen, Verstärkungsfilamente aufweisen, die parallel zu dieser Glasfaser (7) ausgerichtet sind, und dadurch, dass entweder die Zahl von aufeinanderfolgenden Schichten oder die Dicke dieser Schichten, in denen die Verstärkungsfilamente parallel zu dieser Glasfaser (7) ausgerichtet sind, mit zunehmender Annäherung an diese Glasfaser (7) zunimmt.

6. Vorrichtung nach einem der vorangehenden Ansprüche, **dadurch gekennzeichnet, dass** diese Mittel zur Modifikation des Lichtdurchgangs durch diese Glasfaser aus einem Bragg-Gitter gebildet werden.

7. Vorrichtung nach Anspruch 6, **dadurch gekennzeichnet, dass** der Temperaturkoeffizient dieser Matrix nahe null gewählt wird, um die Auswirkungen von Temperaturänderungen auf das Bragg-Gitter zu kompensieren.

8. Vorrichtung nach einem der vorangehenden Ansprüche, **dadurch gekennzeichnet, dass** dieser Matrix Metall nahe zumindest einer ihrer Aussenseiten einverleibt wird, damit dieser Transduktor (1; 11) an eine Struktur aus Metall angeschweisst werden kann.

9. Vorrichtung nach einem der Ansprüche 1, 3 bis 8, **dadurch gekennzeichnet, dass** diese Abschnitte (13, 14) für die Übertragung der Dehnungen je zwei Überdicken zu beiden Seiten einer Lamelle (12) aufweisen, die sich über die gesamte Länge dieses Transduktors (11) erstreckt, wobei die innere Querfläche (13a, 14a) jeder Überdicke einen Winkel (θ) zwischen 6° und 10° mit den entsprechenden Seiten dieser Lamelle (12) bildet.

10. Vorrichtung nach einem der vorangehenden Ansprüche, **dadurch gekennzeichnet, dass** einer gegebenen Glasfaser eine Mehrzahl von Transduktoren zugeordnet ist, wobei die betreffenden Fasersegmente, die dieser Mehrzahl von Transduktoren zugeordnet sind, je ein Bragg-Gitter aufweisen, das eine unterschiedliche Wellenlänge reflektiert, wobei dieser Photorezeptor (9) Organe für ein Multiplexing der reflektierten Signale umfasst.

## Claims

1. A fiber-optic device for measuring stresses, which comprises at least one transducer (1; 11) formed from a matrix through which at least one segment of optical fiber (7) passes, conformed so that the transmission of light is modified depending on a stress to be measured, said stress being transmitted by said matrix to said optical fiber (7), an input end of this optical fiber (7) being intended to be connected to a photoemitter (8) and an output end to a photoreceiver (9), **characterized in that** said transducer (1; 11) is of elongate shape, through which said segment of optical fiber (7) passes longitudinally and that it includes a central portion (2; 12) intended to be subjected to the stresses to be measured, its two ends being integral respectively with two parts (3, 4; 13, 14) for transmitting the stresses to said central portion (2; 12), having means (5a, 5b, 6a, 6b; 13a, 14a) for fastening them to the structure to be measured, and **in that** said matrix is made of a composite reinforced with filaments in order to give said transducer (1; 11) an elastic modulus which may be adapted depending on the structure to be measured.

2. The device as claimed in claim 1, **characterized in that** said transducer (1) has an approximately constant thickness, said optical fiber (7) passing through this transducer (1; 11) approximately in the middle of its thickness and of its width.

3. The device as claimed in one of the preceding claims, **characterized in that** said reinforcing filaments are high-elastic-modulus filaments.

4. The device as claimed in one of the preceding claims, **characterized in that** said reinforcing filaments are distributed in the form of parallel layers of filaments, some oriented longitudinally and some transversely to said transducer.

5. The device as claimed in claim 4, **characterized in that** the layers of composite which are adjacent to said optical fiber (7) have reinforcing filaments oriented parallel to this optical fiber (7) and **in that** the number either of successive layers or the thickness of the latter in which the reinforcing filaments are oriented parallel to this optical fiber (7) progressively increases as said optical fiber (7) is approached.

6. The device as claimed in one of the preceding claims, **characterized in that** said means for modifying the transmission of light through said optical fiber are formed by a Bragg grating.

7. The device as claimed in claim 6, **characterized in that** the thermal coefficient of said matrix is chosen close to zero so as to compensate for the effects of temperature variations on the Bragg grating.

8. The device as claimed in one of the preceding claims, **characterized in that** metal is incorporated into said matrix in the vicinity of at least one of its external faces, in order to allow said transducer (1; 11) to be soldered to a metal structure.

9. The device as claimed in one of claims 1 and 3 to 8, **characterized in that** said stress transmission parts (13, 14) each have two additional thicknesses on each side of a blade (12) extending over the length of said transducer (11), the internal transverse face (13a, 14a) of each additional thickness making an angle (θ) of between 6° and 30° with the respective faces of said blade (12).

10. The device as claimed in one of the preceding claims, **characterized in that** a plurality of transducers are coupled to one and the same optical fiber, the respective segments of the fiber which are coupled to said plurality of transducers each having a Bragg grating reflecting a different wavelength, said photoreceiver (9) including means for multiplexing the reflected signals.
